(19) Europäisches Patentamt
European Patent Office
Office européen des brevets

(11) **EP 1 761 068 A1**

(12) **EUROPEAN PATENT APPLICATION**

(43) Date of publication:
**07.03.2007 Bulletin 2007/10**

(51) Int Cl.:
***H04N 7/50*** *(2006.01)*

(21) Application number: **05300704.3**

(22) Date of filing: **31.08.2005**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **Thomson Licensing**
**92100 Boulogne-Billancourt (FR)**

(72) Inventors:
• **Zhu, Li Hua**
 **Qing Road**
 **Hai Dian Dis.**
 **100085, Beijing (CN)**

• **Chen, Zhi Bo**
 **Road,**
 **Hai Dian Dist.**
 **100085, Beijing (CN)**
• **Wang, Charles**
 **8 Xue Quing Road**
 **Hai Dian100085, Beijing (CN)**

(74) Representative: **Hartnack, Wolfgang**
 **Deutsche Thomson-Brandt GmbH**
 **European Patent Operations**
 **Karl-Wiechert-Allee 74**
 **30625 Hannover (DE)**

(54) **Method and apparatus for bit rate control in video signal encoding using a rate-distortion model**

(57)    In many video encoding bit rate control models such as TMN8 and RHO domain, the distortion *D* has been described as a uniform weighted distortion, and therefore the distortion in each macroblock is introduced by uniformly quantising its DCT transform coefficients with a quantiser of step size Qstep. The TMN8 rate control uses a frame-layer rate control to select a target number of bits for the current frame, and a macroblock-layer rate control to select the values of the quantisation step sizes for the macroblocks. However, the distribution of the residual coding error does not conform to a uniform distribution but approximately to a Laplacian distribution. According to the invention an approximated but still easy-to-use Laplacian distribution model is calculated for the quantisation step size adaptation in the macroblock layer bit rate control.

Fig.5

EP 1 761 068 A1

**Description**

The invention relates to a method and to an apparatus for bit rate control in video signal encoding using a Rate-Distortion model, the pictures of which video signal are divided into a grid of pixel blocks, wherein the pixels in a block are transformed, quantised, inverse quantised and inverse transformed, and wherein the picture sequence encoding types include intra coding and non-intra coding.

Background

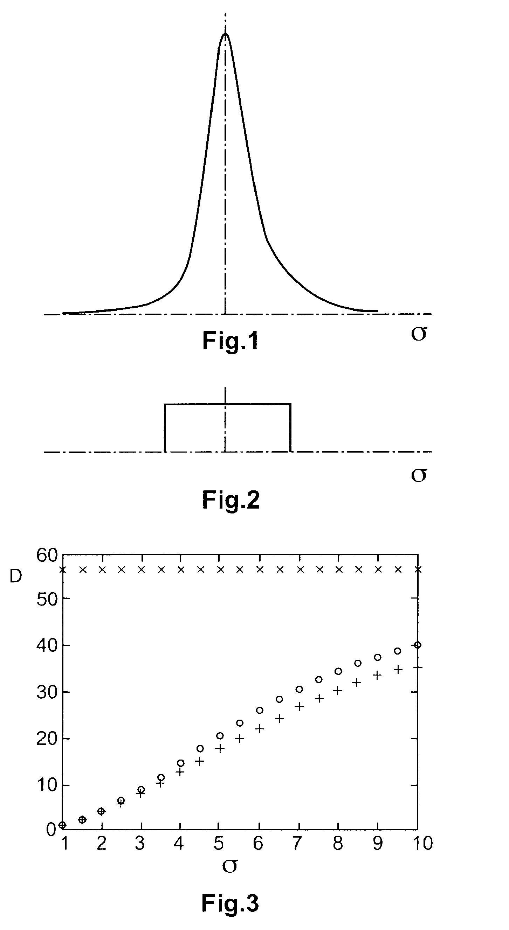

In many video encoding bit rate control models such as TMN8 and RHO domain, the distortion $D$ (i.e. the encoding/decoding error for a pixel block caused by quantisation) has been described as a uniform weighted distortion, the distribution of which is shown in Fig. 2 as a function of the standard deviation of the prediction residue σ, and therefore the distortion in each macroblock is introduced by uniformly quantising its DCT transform coefficients with a quantiser of step size Qstep. The following is a typically used distortion measure $D$ for the encoded macroblock, it is described for example in J. Ribas-Corbera, S. Lei, "Rate Control in DCT Video Coding for Low-Delay Communications", IEEE Trans. CSVT, Feb. 1999:

$$D = \frac{1}{N} \sum_{i=1}^{N} \alpha_i^2 \frac{Qstep_i^2}{12} \tag{1}$$

where N is the number of macroblocks in a frame, factor $\alpha_i$ is the distortion or importance weight of the $i$-th macroblock and $Qstep_i$ is the step size used for quantising the $i$-th macroblock.

The TMN8 rate control uses a frame-layer rate control to select a target number of bits for the current frame, and a macroblock-layer rate control to select the values of the quantisation step sizes for the macroblocks.
In the frame-layer rate control a target number B of bits for the current frame is determined by:

$$B = R/F - \Delta$$

$$\Delta = \begin{cases} W/F, & W > Z*M \\ W-Z*M & \text{otherwise} \end{cases}$$

$$W = \max(W_{prev} + B_{prev} - R/F, \ 0),$$

wherein B is the target number of bits for a frame (including the bits for quantised transform coefficients, motion vectors and header information), $R$ is the channel rate in bits per second, $F$ is the frame rate in frames per second, $W$ is the number of bits in the encoder buffer, $Z = 0.1$ is set as a default value to achieve a low delay, $M$ is a maximum value indicating buffer fullness that is set by default to $R/F$, $W_{prev}$ is the previous number of bits in the encoder buffer, and $B_{prev}$ is the actual number of bits used for encoding the previous frame.
The frame target bit rate $B$ varies depending on the type of video frame, e.g. I, P or B, on the buffer fullness and on the channel throughput. If $W$ is greater than 10% of $M$, $B$ is slightly decreased. Otherwise, $B$ is slightly increased.
The macroblock-layer rate control selects the values of the quantisation step sizes $Q_{step}$ for all the macroblocks in a current frame so that the sum of the bits used for these macroblocks is close to the frame target bit rate $B$.

Invention

However, equation (1) is not a good model for estimating or calculating the residual coding error because the distribution of the residual coding error (for P frames or for non-intra frames) after the transform does not conform to a uniform distribution but approximately to a Laplacian distribution as shown in Fig. 1 as a function of the standard deviation of the prediction residue σ, which has been proven by experiments. But because in practice it is very complex to use Laplace distribution for controlling the bit rate, most rate control methods such as TMN8 and RHO domain still prefer to use the uniform distribution, which however induces a bit rate control error and visual quality degradation.

A problem to be solved by the invention is to provide an optimised but still simple distortion model for video encoding bit rate control, which model approximates a Laplacian distribution and fits for any bit rate control that has a relation with the distortion. This problem is solved by the method disclosed in claim 1. A corresponding video signal and storage medium are disclosed in claims 8 and 9, respectively. An apparatus that utilises this method is disclosed in claim 2.

The invention uses a distortion model processing based on approximated Lapalacian distortion distribution, instead of uniform distortion distribution, for the block or macroblock layer bit rate control by quantisation step size adaptation. This kind of processing can be used in any rate control which is based on a Rate-Distortion model, such as MPEG2 Video (ISO/IEC 13818-2) rate control, MPEG4 Video (ISO/IEC 14496-2) rate control, MPEG4 AVC (ISO/IEC 14496-10, Advanced Video Coding) rate control, and MPEG4-AVC SVC (Scalable Video Coding) rate control.

The inventive bit rate control is more accurate than other Rate-Distortion bit rate controls. It is very simple and can be realised easily in practical applications.

In principle, the inventive method is suited for bit rate control in video signal encoding using a Rate-Distortion model for said bit rate control, the pictures of which video signal are divided into a grid of pixel blocks or macroblocks, wherein the pixels in a block or macroblock are transformed, quantised, inverse quantised and inverse transformed, and wherein the picture sequence encoding types include intra coding and non-intra coding, said method including the steps:

- initialising the coding of an intra picture for determining the quantiser step size to be used for each block or macroblock in said intra picture;
- coding the blocks or macroblocks of said intra picture thereby using said pre-determined quantiser step size;
- after said intra picture has been encoded, updating the parameters of a Laplace distortion model for the following non-intra picture;
- calculating a target bit number for said following non-intra picture;
- adjusting a corresponding encoder buffer fullness value;
- coding the current non-intra picture;
- updating the parameters of said Laplace distortion model for the following non-intra picture;
- checking whether or not the encoder buffer is overflow, and if true, skipping the current non-intra picture and re-updating correspondingly the target bit number for the next non-intra picture coding and re-adjusting correspondingly said buffer fullness value;
- correspondingly continuing the coding of the remaining non-intra pictures.

In principle the inventive apparatus is suited for bit rate control in video signal encoding using a Rate-Distortion model for said bit rate control, the pictures of which video signal are divided into a grid of pixel blocks or macroblocks, wherein the pixels in a block or macroblock are transformed, quantised, inverse quantised and inverse transformed, and wherein the picture sequence encoding types include intra coding and non-intra coding, said apparatus including:

- means being adapted for initialising the coding of an intra picture for determining the quantiser step size to be used for each block or macroblock in said intra picture;
- means being adapted for coding the blocks or macroblocks of said intra picture thereby using said pre-determined quantiser step size;
- means being adapted for updating, after said intra picture has been encoded, the parameters of a Laplace distortion model for the following non-intra picture;
- means being adapted for calculating a target bit number for said following non-intra picture;
- means being adapted for adjusting a corresponding encoder buffer fullness value;
- means being adapted for coding the current non-intra picture;
- means being adapted for updating the parameters of said Laplace distortion model for the following non-intra picture;
- means being adapted for checking whether or not the encoder buffer is overflow, and if true, for skipping the current non-intra picture and re-updating correspondingly the target bit number for the next non-intra picture coding and re-adjusting correspondingly said buffer fullness value, whereby the coding of the remaining non-intra pictures is correspondingly continued.

Advantageously the coding of the current non-intra picture includes:

- initialising the Laplace distortion model parameters for said current non-intra picture;
- computing for the first block or macroblock a quantiser step size according to a distortion model derived from said Laplace distortion model;

- coding said first block or macroblock, thereby applying said computed quantiser step size;
- updating the Laplace distortion model parameters for the following block or macroblock;
- checking whether or not the end of the current non-intra picture has been reached, and if not true, continuing the processing for the next block or macroblock with the next quantiser step size computation for the next block or macroblock, and if true, continuing the processing with said updating of the parameters of said Laplace distortion model for the following non-intra picture.

Advantageous additional embodiments of the invention are disclosed in the respective dependent claims.

Drawings

Exemplary embodiments of the invention are described with reference to the accompanying drawings, which show in:

Fig. 1 Laplacian distortion distribution;
Fig. 2 uniform distortion distribution;
Fig. 3 distortion as a function of σ for uniform, real and proposed simulated distortion;
Fig. 4 initialisation and updating processing for frame layer bit rate control;
Fig. 5 initialisation and updating processing for macroblock layer bit rate control in P frames;
Fig. 6 encoder block diagram.

Exemplary embodiments

The Laplace distortion distribution bit rate control model processing is carried out as described below. The probability density function (PDF) of Laplace (cf. Fig. 1) can be described as

$$f_y(y) = \frac{1}{\sqrt{2}\sigma} e^{-\frac{\sqrt{2}}{\sigma}|y|} \quad , \qquad (2)$$

where σ is the standard deviation of the prediction residue within a block of transform coefficients and $y$ is the transform coefficient. Practical experiments with different source sequences show that the distribution of transform (e.g. DCT transform) coefficient magnitudes (including intra and inter transform coefficients) in any codec like MPEG2-2, MPEG4-2, and MPEG4 AVC approximates the Laplace distribution. Generally, most codecs which include MPEG2, MPEG4 or MPEG4 AVC use a scalar quantiser. The basic forward quantiser operation is

$$Z_{ij} = \text{round}(\frac{Y_{ij}}{Q}) \quad , \qquad (3)$$

where i and j are the horizontal and vertical positions in a transform block, $Y_{ij}$ is an original transform coefficient, Q is the quantiser step size and $Z_{ij}$ is the quantised version of that transform coefficient.
MPEG2 and MPEG4 support 31 different values of Q. In MPEG4 AVC a total of 52 Q values are supported by the standard and these are indexed by a quantisation parameter value QP. Q doubles in size for every increment of '6' in QP, and Q increases by 12.5% for each increment of '1' in QP. Anyway, the different Q steps have the same properties for the quantisation.
The mean squared error can be used as a measure for the theoretical distortion $D(Q)$ which can be described as follows:

$$D(Q) = \sum_{i=-\infty}^{\infty} \int_{Q(i-0.5)}^{Q(i+0.5)} (y - Q(i))^2 f_y(Y) dy \quad , \qquad (4)$$

wherein $Q(i)$ is the reconstructed $y$ value derived after quantisation and inverse quantisation.

Following insertion of equation (2) into equation (4):

$$D(Q) = \sum_{i=-\infty}^{\infty} \int_{Q(i-0.5)}^{Q(i+0.5)} (y - Q(i))^2 \frac{1}{\sqrt{2}\sigma} e^{-\frac{\sqrt{2}}{\sigma}|y|} dy \qquad (5)$$

The equation (5) is an even function of Q. Therefore it can be re-written as:

$$D(Q) = \sum_{i=1}^{\infty} 2\left( \int_{Q(i-0.5)}^{Q(i+0.5)} (y - Q(i))^2 \frac{1}{\sqrt{2}\sigma} e^{-\frac{\sqrt{2}}{\sigma}y} dy \right) + 2\left( \int_{0}^{0.5Q} (y - Q(i))^2 \frac{1}{\sqrt{2}\sigma} e^{-\frac{\sqrt{2}}{\sigma}y} dy \right) \qquad (6)$$

Because $(y-Q(i))^2 = y^2 - 2yQ(i) + Q(i)^2$ and

$$\int y e^{-ay} dy = -\frac{e^{-ay}}{a^2}(ay+1) + c$$

$$\int y^n e^{-ay} dy = -\frac{1}{a} e^{-ay} y^n + \frac{n}{a} \int y^{n-1} e^{-ay} dy \quad , \qquad (7)$$

$D(Q)$ can be derived from equation (5) using equations (7) as:

$$D(Q) = \sigma^2 - \frac{\sqrt{2}Q\sigma}{e^{\frac{Q}{\sqrt{2}\sigma}} - e^{-\frac{Q}{\sqrt{2}\sigma}}} = \sigma^2 - \frac{Q\sigma}{\sqrt{2}\sinh(\frac{Q}{\sqrt{2}\sigma})} = \sigma^2 \left(1 - \frac{\frac{Q}{\sqrt{2}\sigma}}{\sinh(\frac{Q}{\sqrt{2}\sigma})}\right) \quad . \qquad (8)$$

Further, D can be described as

$$D = \sigma^2 \left(1 - \frac{\beta}{\sinh \beta}\right) \qquad (9)$$

wherein

$$\beta = \frac{Q}{\sqrt{2}\sigma} \quad .$$

The SINH function is defined as

$$\sinh x = \frac{x}{1!} + \frac{x^3}{3!} + \frac{x^5}{5!} + \dots \quad .$$

When assuming that $\dfrac{Q}{\sqrt{2}\sigma} = \beta < 1$, $\sinh(\beta)$ can be approximated by $\sinh(\beta) = \beta + \beta^3/6$.

Then, equation (9) can be expressed as

$$D \approx \sigma^2(1- 6\beta/(6\beta+\beta^3))$$

$$= (6\sigma^2 + \sigma^2\beta^2 - 6\sigma^2)/(6+\beta^2) , \quad \text{i.e.} \quad D \approx \sigma^2(\frac{\beta^2}{6+\beta^2}) . \tag{10}$$

After replacing $\beta$, the theoretical value of $D$ is

$$D_{Theory} \approx \sigma^2(\frac{Q^2}{12\sigma^2 + Q^2}) \tag{11}$$

for the approximated Laplacian distribution of the distortion of transform coefficients coding/decoding errors for a pixel block.

A corresponding comparison between Lapalacian distortion, Laplace simulation distortion and uniform distortion is depicted in Fig. 3 in which, for quantiser step size $Q = 26$, the distortion $D$ is shown as a function of $\sigma$. The 'x' signs represent the uniform distortion, the 'o' signs represent the real distortion and the '+' signs represent the inventive distortion simulation. The D value for the uniform distortion results from $Q = 26$, $Q^2/12 = 56.3$ .

In TMN8, the original macroblock-layer rate control model is described by

$$Q = \sqrt{\frac{AK}{B - ANC} \frac{\sigma_i}{\alpha_i} \sum_{k=1}^{N} \alpha_k \sigma_k} , \tag{12}$$

where $A$ is the number of pixels in a macroblock, $K$ is a distortion model parameter, $B$ is the total number of target bits for encoding the current frame, $N$ is the number of macroblocks in the frame, $C$ is the overhead rate, $\sigma_i$ is the standard deviation of the residuum of the transform coefficient coding/decoding errors in the $i$-th block or macroblock, and $\alpha_i$ is the distortion weight of the $i$-th macroblock.

The inventive Laplace distortion model approximation can be applied in any (block or macroblock layer) bit rate control such as TMN8, RHO-domain, and so on.

When using the inventive processing for a TMN8 rate control, the TMN8 macroblock-layer rate control can be modified according to:

$$Q_i = \sqrt{\frac{12\sigma_i^2 AK \sum_{k=1}^{N} \alpha_k \sigma_k}{\alpha_i \sigma_i [AKN + 12(B - ANC)] - AK \sum_{k=1}^{N} \alpha_k \sigma_k}} , \tag{13}$$

wherein the parameters have the same meaning as in formula (12). Formula (13) requires about the same computational complexity as formula (12). However, its bit rate control accuracy or quality is better than when applying formula (12). Formula (13) is derived using formula (11) as follows. According to Rate-Distortion theory:

$$Q_1^* \; Q_2^* \cdots Q_N^* = \arg\min \frac{1}{N} \sum_{k=1}^{N} D_k = \arg\min \frac{1}{N} \sum_{k=1}^{N} (\alpha_k^2 \sigma_k^2 \frac{Q_k^2}{12\sigma_k^2 + Q_k^2}) \tag{14.1}$$

at the bit constraint

$$\sum_{k=1}^{N} B_k = B \quad . \tag{14.2}$$

According to the Lagrange algorithm:

$$f(Q) = Q_1^* \; Q_2^* \cdots Q_N^* \lambda^* = \arg\min \frac{1}{N} \sum_{k=1}^{N} (\alpha_k^2 \sigma_k^2 \frac{Q_k^2}{12\sigma_k^2 + Q_k^2}) + \lambda (\sum_{k=1}^{N} B_k - B) \tag{14.3}$$

According to publication [1]:

$$B_k = A(K \frac{\sigma_k^2}{Q_k^2} + C)$$

$$f(Q) = Q_1^* \; Q_2^* \cdots Q_N^* \lambda^* = \arg\min \frac{1}{N} \sum_{k=1}^{N} (\alpha_k^2 \sigma_k^2 \frac{Q_k^2}{12\sigma_k^2 + Q_k^2}) + \lambda [\sum_{k=1}^{N} (A(K \frac{\sigma_k^2}{Q_k^2} + C)) - B] \tag{14.4}$$

Forming the derivative of $f(Q)$:

$$\frac{\partial f(Q)}{\partial Q_i} \Rightarrow \frac{1}{N} \frac{2Q_i \alpha_i^2 \sigma_i^2 12\sigma_i^2}{(12\sigma_i^2 + Q_i^2)^2} - 2\lambda AK \frac{\sigma_i^2}{Q_i^3} = 0$$

$$\Rightarrow \frac{1}{N} \frac{12 Q_i \alpha_i^2 \sigma_i^2}{(12\sigma_i^2 + Q_i^2)^2} - \frac{\lambda AK}{Q_i^3} = 0$$

$$\Rightarrow \frac{12 Q_i \alpha_i^2 \sigma_i^2}{(12\sigma_i^2 + Q_i^2)^2} = \frac{\lambda AKN}{Q_i^3}$$

$$\Rightarrow \frac{12 Q_i^4}{(12\sigma_i^2 + Q_i^2)^2} = \frac{\lambda AKN}{\alpha_i^2 \sigma_i^2}$$

$$\Rightarrow Q_i^2 = \frac{12\sigma_i^2 \sqrt{\lambda AKN}}{\sqrt{12}\alpha_i \sigma_i - \sqrt{\lambda AKN}} \tag{14.5}$$

$$\because \sum_{k=1}^{N} (A(K\frac{\sigma_k^2}{Q_k^2} + C)) = B$$

$$\Rightarrow \sum_{k=1}^{N} AK\frac{\sigma_k^2}{Q_k^2} = B - ANC$$

$$\Rightarrow \sum_{k=1}^{N} AK\frac{\sigma_k^2}{(\dfrac{12\sigma_k^2\sqrt{\lambda AKN}}{\sqrt{12}\alpha_k\sigma_k - \sqrt{\lambda AKN}})} = B - ANC \qquad \text{(by using (14.5))}$$

$$\Rightarrow \sum_{k=1}^{N} AK\frac{\sqrt{12}\alpha_k\sigma_k - \sqrt{\lambda AKN}}{12\sqrt{\lambda AKN}} = B - ANC$$

$$\Rightarrow \sum_{k=1}^{N} AK(\sqrt{12}\alpha_k\sigma_k - \sqrt{\lambda AKN}) = 12\sqrt{\lambda AKN}(B - ANC)$$

$$\Rightarrow \sqrt{12}AK\sum_{k=1}^{N}\alpha_k\sigma_k - ANK\sqrt{\lambda AKN} = 12\sqrt{\lambda AKN}(B - ANC)$$

$$\Rightarrow \sqrt{\lambda AKN}[12(B - ANC) + ANK] = \sqrt{12}AK\sum_{k=1}^{N}\alpha_k\sigma_k$$

$$\Rightarrow \sqrt{\lambda AKN} = \frac{\sqrt{12}AK\sum_{k=1}^{N}\alpha_k\sigma_k}{ANK + 12(B - ANC)} \qquad (14.6)$$

Formula (14.5) by application of formula (14.6):

$$Q_i^2 = \cfrac{12\sigma_i^2 \cfrac{\sqrt{12}AK\sum\limits_{k=1}^{N}\alpha_k\sigma_k}{ANK+12(B-ANC)}}{\sqrt{12}\alpha_i\sigma_i - \cfrac{\sqrt{12}AK\sum\limits_{k=1}^{N}\alpha_k\sigma_k}{ANK+12(B-ANC)}}$$

$$\Rightarrow Q_i^2 = \cfrac{12\sigma_i^2 AK\sum\limits_{k=1}^{N}\alpha_k\sigma_k}{\alpha_i\sigma_i[ANK+12(B-ANC)]-AK\sum\limits_{k=1}^{N}\alpha_k\sigma_k}$$

$$\Rightarrow Q_i = \sqrt{\cfrac{12\sigma_i^2 AK\sum\limits_{k=1}^{N}\alpha_k\sigma_k}{\alpha_i\sigma_i[ANK+12(B-ANC)]-AK\sum\limits_{k=1}^{N}\alpha_k\sigma_k}} \qquad (13)$$

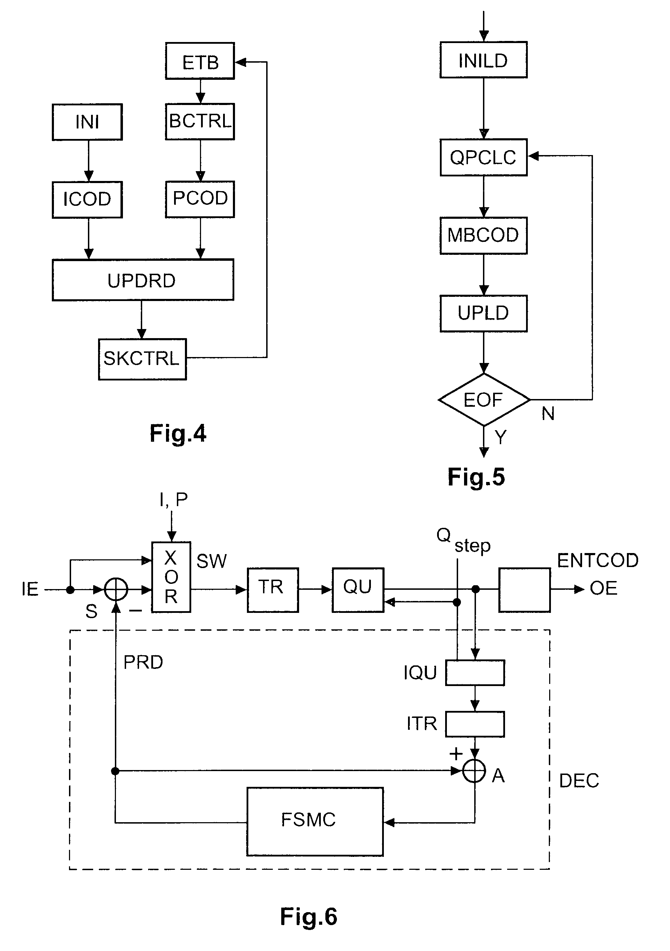

In Fig. 5 the video data input signal IE includes block or macroblock data to be encoded. In case intraframe (I) data are to be encoded, subtractor S passes the video input data via a transformer TR (computing e.g. a DCT transform) and a quantiser Q to an entropy encoder ENTCOD that delivers the encoder video data output signal OE.
In case interframe (P, B), i.e. non-intra frame, data are to be encoded, subtractor S subtracts predicted block or macroblock data PRD from the input signal IE and passes the difference data via transformer TR and quantiser Q to entropy encoder ENTCOD. The switching between the intraframe and interframe modes is carried out by a corresponding switch SW that may be implemented by an XOR function.
The output signal of Q is also fed to an inverse quantiser IQU, the output signal of which passes through an inverse transformer ITR to an adder A and represents reconstructed block or macroblock difference data. The output signal of adder A is intermediately stored in frame store and motion compensation means FSMC which also perform motion compensation on reconstructed block or macroblock data and which deliver such predicted block or macroblock data PRD to subtractor S and to the other input of adder A.
Quantiser Q and inverse quantiser IQU are controlled by the current quantiser step size $Q_{step}$ (corresponding to $Q_i$ in formula (13) in P frames, as described above). It is also possible that FSMC does not perform motion compensation. Inverse quantiser IQU, inverse transformer ITR and frame store and motion compensation means FSMC represent a decoder DEC.

In the I frame and macroblock layer bitrate control processing and P frame layer bitrate control processing depicted in Fig. 4, for an I frame an initialisation step INI is carried out which can use a TMN8 model (if e.g. a bit control error under 5% is required) to compute the quantisation parameter QP and thereby the quantisation step size for each macroblock in that I frame. However, the QP for this I frame can also be derived from the adjacent prior P frame, which means that for all macroblocks in the first I frame a fixed QP is used. Because the Laplace distortion model fits only to the residuum in P frames, and because experiments have shown that in I frames the prediction residue complies with the General Gauss Distribution, the bitrate control for I frames can select either a fixed QP or an adaptive QP derived from the TMN8 model.
Advantageously, by using a fixed QP for each I frame macroblock one gets a smaller 'intra refresh' effect as compared to using an adaptive QP according to the TMN8 model. However, using a fixed QP for an I frame may introduce additional bits for that frame. Therefore an initialisation is carried out only for I frames, but not for P frames because the inventive rate control is accurate enough to adjust the QP for P frames as necessary.

After correspondingly encoding the I frame in step ICOD, it will provide the left-bits information required for applying the parameters of the Laplace distortion model for the following P frame. The depicted skipping control step SKCTRL can be omitted following this I frame encoding. As an alternative, if there was buffer overflow, steps INI, ICOD, UPDRD and SKCTRL are carried out again whereby the quantiser step size or sizes are adapted accordingly.
The target bit number for the following P frame is calculated in an estimate target bitrate step ETB and the corresponding encoder buffer fullness value is adjusted in a buffer control step BCTRL. Step BCTRL determines the buffer filling level, which is used for the macroblock layer bit rate control processing according to Fig. 5 to prevent buffer underflow and buffer overflow. For example, if the buffer fullness level is greater than 80% of the buffer size, a delta value is added to the QP value for preventing overflow. If the buffer fullness level is smaller than e.g. 20% of the buffer size, a delta value is subtracted from the QP value for preventing underflow.

Thereafter the current P frame is encoded in step PCOD, followed by step UPDRD.

In skipping control step SKCTRL it is checked whether or not the encoder buffer (total buffer) is overflow. If true, the current frame is skipped, and the target bit number for the next P frame coding is re-updated in the estimate target bitrate step ETB and the corresponding encoder buffer fullness value is re-adjusted in the buffer control step BCTRL.

The P frame encoding in step PCOD is explained in connection with Fig. 5. The processing for a current P frame starts with a Laplace distortion model parameters initialising step INILD. Thereafter, for the first macroblock in the current P frame the QP, i.e. the quantiser step size $Q_1$ according to formula (13), is calculated in step QPCLC and applied in encoding the macroblock in step MBCOD. The macroblock encoding is followed by a Laplace distortion updating step UPLD. Thereafter it is checked in step EOF whether or not the end of the current P frame has been reached. If not true, the processing continues for the second or next, respectively, macroblock with step QPCLC. If true, the processing continues with step UPDRD in Fig. 4.

"P frame" may include any form of predicted frame, e.g. B frame.

The invention can also be applied to field-based encoding.

**Claims**

1. Method for bit rate control in video signal (IE) encoding using a Rate-Distortion model for said bit rate control, the pictures of which video signal are divided into a grid of pixel blocks or macroblocks, wherein the pixels in a block or macroblock are transformed (TR), quantised (QU), inverse quantised (IQU) and inverse transformed (ITR), and wherein the picture sequence encoding types include intra coding and non-intra coding, **characterised by** the steps:

   - initialising (INI) the coding of an intra picture for determining the quantiser step size to be used for each block or macroblock in said intra picture;
   - coding (ICOD) the blocks or macroblocks of said intra picture thereby using said pre-determined quantiser step size;
   - after said intra picture has been encoded, updating (UPDRD) the parameters of a Laplace distortion model for the following non-intra picture;
   - calculating (ETB) a target bit number (B) for said following non-intra picture;
   - adjusting (BCTRL) a corresponding encoder buffer fullness value;
   - coding (PCOD) the current non-intra picture;
   - updating (UPDRD) the parameters of said Laplace distortion model for the following non-intra picture;
   - checking (SKCTRL) whether or not the encoder buffer is overflow, and if true, skipping the current non-intra picture and re-updating correspondingly the target bit number (B) for the next non-intra picture coding and re-adjusting correspondingly said buffer fullness value;
   - correspondingly continuing the coding (PCOD) of the remaining non-intra pictures.

2. Apparatus for bit rate control in video signal (IE) encoding using a Rate-Distortion model for said bit rate control, the pictures of which video signal are divided into a grid of pixel blocks or macroblocks, wherein the pixels in a block or macroblock are transformed (TR), quantised (QU), inverse quantised (IQU) and inverse transformed (ITR), and wherein the picture sequence encoding types include intra coding and non-intra coding, said apparatus including:

   - means (INI) being adapted for initialising the coding of an intra picture for determining the quantiser step size to be used for each block or macroblock in said intra picture;
   - means (ICOD) being adapted for coding the blocks or macroblocks of said intra picture thereby using said pre-determined quantiser step size;
   - means (UPDRD) being adapted for updating, after said intra picture has been encoded, the parameters of a Laplace distortion model for the following non-intra picture;
   - means (ETB) being adapted for calculating a target bit number (B) for said following non-intra picture;
   - means (BCTRL) being adapted for adjusting a corresponding encoder buffer fullness value;
   - means (PCOD) being adapted for coding the current non-intra picture;
   - means (UPDRD) being adapted for updating the parameters of said Laplace distortion model for the following non-intra picture;
   - means (SKCTRL) being adapted for checking whether or not the encoder buffer is overflow, and if true, for skipping the current non-intra picture and re-updating correspondingly the target bit number (B) for the next non-intra picture coding and re-adjusting correspondingly said buffer fullness value,

whereby the coding (PCOD) of the remaining non-intra pictures is correspondingly continued.

3. Method according to claim 1, or apparatus according to claim 2, wherein said coding (PCOD) of the current non-intra picture includes:

- initialising (INILD) the Laplace distortion model parameters for said current non-intra picture;
- computing (QPCLC) for the first block or macroblock a quantiser step size ($Q_1$) according to a distortion model derived from said Laplace distortion model;
- coding (MBCOD) said first block or macroblock, thereby applying said computed quantiser step size;
- updating (UPLD) the Laplace distortion model parameters for the following block or macroblock;
- checking (EOF) whether or not the end of the current non-intra picture has been reached, and if not true, continuing the processing for the next block or macroblock with the next quantiser step size computation for the next block or macroblock, and if true, continuing the processing with said updating (UPDRD) of the parameters of said Laplace distortion model for the following non-intra picture.

4. Method according to claim 1 or 3, or apparatus according to claim 2 or 3, wherein the Laplacian distribution D of the distortion of transform coefficients coding/decoding errors for a pixel block is approximated by

$$D \approx \sigma^2 \left( \frac{Q^2}{12\sigma^2 + Q^2} \right) \ ,$$

wherein Q is the quantiser step size and σ is the variance of that distribution.

5. Method according to one of claims 1, 3 and 4, or apparatus according to one of claims 2 to 4, wherein the quantiser step size $Q_i$ for the $i$-th block or macroblock in a predicted picture is

$$Q_i = \sqrt{\frac{12\sigma_i^2 AK \sum_{k=1}^{N} \alpha_k \sigma_k}{\alpha_i \sigma_i [AKN + 12(B - ANC)] - AK \sum_{k=1}^{N} \alpha_k \sigma_k}} \ ,$$

wherein A is the number of pixels in a block or macroblock, $K$ is a distortion model parameter, $\beta_i$ is the number of bits left for encoding the current picture and $\beta_i = B$ is set at the beginning of the picture whereby $B$ is the target number of bits for the picture as explained above, $N_i$ is the number of block or macroblocks that remain to be encoded in the picture, $C$ is the overhead rate, $\sigma_i$ is the standard deviation of the residuum of the transform coefficient coding/decoding errors in the $i$-th block or macroblock, and $\alpha_i$ is the distortion weight of the $i$-th block or macroblock, respectively.

6. Method according to one of claims 1 and 3 to 5, or apparatus according to one of claims 2 to 5, wherein in said coding (ICOD) of an intra picture block or macroblock a quantiser step size is used that corresponds to the step size used in the corresponding block or macroblock in the non-intra picture arranged before said intra picture.

7. Method according to one of claims 1 and 3 to 6, or apparatus according to one of claims 2 to 6, wherein said encoded video signal is an MPEG2, MPEG4, MPEG4 AVC or SVC video signal.

8. A digital video signal encoded using the method of one of claims 1 and 3 to 7.

9. Storage medium, for example an optical disc, that contains or stores, or has recorded on it, a digital video signal that was encoded according to the method of one of claims 1 and 3 to 7.

**Fig.1**

σ

**Fig.2**

σ

**Fig.3**

**Fig.4**

**Fig.5**

**Fig.6**

European Patent
Office

**EUROPEAN SEARCH REPORT**

Application Number

EP 05 30 0704

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CHI-WAH WONG ET AL: "Piecewise Linear Model for Real-Time Rate Control" ACOUSTICS, SPEECH, AND SIGNAL PROCESSING, 2005. PROCEEDINGS. (ICASSP '05). IEEE INTERNATIONAL CONFERENCE ON PHILADELPHIA, PENNSYLVANIA, USA MARCH 18-23, 2005, PISCATAWAY, NJ, USA,IEEE, 18 March 2005 (2005-03-18), pages 285-288, XP010790632 ISBN: 0-7803-8874-7 * the whole document * ----- | 1-3,7-9 | H04N7/50 |
| D,A | GARDOS T R: "Video Codec Test Model, Near-Term, Version 8 (TMN8) Document Q15-A-59" ITU - T TELECOMMUNICATIONS STANDARDIZATION SECTOR STUDY GROUP 16 VIDEO CODING EXPERTS GROUP, 24 June 1997 (1997-06-24), XP002364837 * page 6 - page 10 * ----- | 1-9 | |
| A | ALTUNBASAK Y ET AL: "An analysis of the DCT coefficient distribution with the H.264 video coder" ACOUSTICS, SPEECH, AND SIGNAL PROCESSING, 2004. PROCEEDINGS. (ICASSP '04). IEEE INTERNATIONAL CONFERENCE ON MONTREAL, QUEBEC, CANADA 17-21 MAY 2004, PISCATAWAY, NJ, USA,IEEE, vol. 3, 17 May 2004 (2004-05-17), pages 177-180, XP010718155 ISBN: 0-7803-8484-9 * the whole document * ----- -/-- | 1-9 | TECHNICAL FIELDS SEARCHED (IPC) H04N |

The present search report has been drawn up for all claims

| Place of search | Date of completion of the search | Examiner |
|---|---|---|
| The Hague | 27 January 2006 | Wahrenberg, A. |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**European Patent Office**

**EUROPEAN SEARCH REPORT**

Application Number

EP 05 30 0704

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CHENG-YU PAI ET AL: "Mpeg-4 rate control algorithm using laplace parameter estimation" MULTIMEDIA AND EXPO, 2003. PROCEEDINGS. 2003 INTERNATIONAL CONFERENCE ON 6-9 JULY 2003, PISCATAWAY, NJ, USA,IEEE, vol. 2, 6 July 2003 (2003-07-06), pages 241-244, XP010650705 ISBN: 0-7803-7965-9 * the whole document * ----- | | |
| D,A | RIBAS-CORBERA J ET AL: "RATE CONTROL IN DCT VIDEO CODING FOR LOW-DELAY COMMUNICATIONS" IEEE TRANSACTIONS ON CIRCUITS AND SYSTEMS FOR VIDEO TECHNOLOGY, IEEE SERVICE CENTER, PISCATAWAY, NJ, US, vol. 9, no. 1, February 1999 (1999-02), pages 172-185, XP000802296 ISSN: 1051-8215 * the whole document * ----- | 1-9 | |
| A | ZHIHAI HE ET AL: "/spl rho/-domain source modeling and rate control for video coding and transmission" 2001 IEEE INTERNATIONAL CONFERENCE ON ACOUSTICS, SPEECH, AND SIGNAL PROCESSING. PROCEEDINGS. (ICASSP). SALT LAKE CITY, UT, MAY 7 - 11, 2001, IEEE INTERNATIONAL CONFERENCE ON ACOUSTICS, SPEECH, AND SIGNAL PROCESSING (ICASSP), NEW YORK, NY : IEEE, US, vol. VOL. 1 OF 6, 7 May 2001 (2001-05-07), pages 1773-1776, XP010802883 ISBN: 0-7803-7041-4 * the whole document * ----- | 1-9 | TECHNICAL FIELDS SEARCHED (IPC) |

The present search report has been drawn up for all claims

| Place of search | Date of completion of the search | Examiner |
|---|---|---|
| The Hague | 27 January 2006 | Wahrenberg, A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **J. RIBAS-CORBERA ; S. LEI.** Rate Control in DCT Video Coding for Low-Delay Communications. *IEEE Trans. CSVT,* February 1999